Europäisches Patentamt

European Patent Office

Office européen des brevets

(19)

(11) Veröffentlichungsnummer : **0 126 475**
**B1**

(12) **EUROPÄISCHE PATENTSCHRIFT**

(45) Veröffentlichungstag der Patentschrift :
15.03.89

(51) Int. Cl.⁴ : **G 01 B 11/30**, G 01 B  9/021

(21) Anmeldenummer : 84105763.1

(22) Anmeldetag : 19.05.84

(54) **Verfahren und Vorrichtung zum berührungsfreien Messen der Ist-Position und/oder des Profils rauher Oberflächen.**

(30) Priorität : 21.05.83 DE 3318678

(43) Veröffentlichungstag der Anmeldung :
28.11.84 Patentblatt 84/48

(45) Bekanntmachung des Hinweises auf die Patenterteilung : 15.03.89 Patentblatt 89/11

(84) Benannte Vertragsstaaten :
CH DE FR GB IT LI SE

(56) Entgegenhaltungen :
DE–A– 3 020 044
FR–A– 2 247 699
APPLIED OPTICS, Band 13, Nr. 5, Mai 1974, Seiten
1085-1088, New York, US; W.B. RIBBENS: "Surface
roughness measurement by two wavelength holographic interferometry"
R. Jones und J.N. Butters: "Some observations on
the direct comparison of the geometry of two objects
using speckle pattern interferometric contouring"
Journal of Physics E: Scientific Instruments, 1975,
Band 8, S. 231-234.
M. Giglio, S. Musazzi und U. Perini: "Surface
roughness measurements by means of speckle wavelength decorrelation", Optics Communications, Band
28, Nr. 2, 1979, S. 166-170

(73) Patentinhaber : Firma Carl Zeiss

D-7920 Heidenheim (Brenz) (DE)
CH DE FR IT LI SE
CARL-ZEISS-STIFTUNG trading as CARL ZEISS

D-7920 Heidenheim (Brenz) (DE)
GB

(72) Erfinder : Fercher, Adolf Friedrich, Prof. Dr.
Huffmannstrasse 66
D-4300 Essen 16 (DE)
Erfinder : Zhang Hu, Hong
Studentenheim Uni-Essen Universitätsstrasse
D-4300 Essen 1 (DE)

## Beschreibung

Die vorliegende Erfindung betrifft ein Verfahren und eine Vorrichtung zum berührungsfreien Messen der Ist-Position und/oder des Profils rauher Oberflächen mit hoher Genauigkeit.

Es sind verschiedene Verfahren zum berührungsfreien Messen von Oberflächen bekannt. Bei den meisten dieser Verfahren wird das von einem Laser erzeugte Licht in die Soll-Position der Oberfläche fokussiert und das von dieser Oberfläche reflektierte Licht wird einem Empfänger zugeführt, der die Lichtintensität mißt. Diese ist am höchsten, wenn die Oberfläche ihre Soll-Position einnimmt. Um einen gewissen Meßbereich um die Soll-Position zu schaffen ist es bekannt eine vor dem Empfänger angeordnete Blende periodisch achsial zu bewegen (Appl. Optic Vol. 5, No. 12, 1966, S. 1961/1962) oder den Fokussierungsbereich der das Laserlicht abbildenden Linse achsial auszudehnen (Feinwerktechnik & Meßtechnik 84, Heft 2, 1976, S. 72/74). Mit diesen Verfahren ist sowohl eine Antastung als auch eine Profilmessung der Oberfläche möglich, jedoch genügt für viele Anwendungsfälle die erreichbare Genauigkeit nicht.

Ein weiteres Verfahren zur berührungsfreien Messung der Form einer Oberfläche bedient sich der Holographie (Appl. Optics Vol. 10, No. 9, 1971, S. 2113/2118). Hierbei wird ein Interferogramm des Prüflings erzeugt, photographisch festgehalten und als Hologramm in die Meßvorrichtung eingelegt. Gemessen wird dann mit Licht einer zweiten Wellenlänge, wobei der Prüfling im Strahlengang bleibt. Es entsteht dabei ein Interferogramm, das eine recht genaue Auswertung ermöglicht. Dieses Verfahren hat jedoch den Nachteil, daß nicht in Echtzeit gearbeitet werden kann.

Dies gilt auch für ein Verfahren zur Erzeugung eines Interferenzstreifenbildes, in dem die Streifenabstände ein Maß für die geometrische Differenz zwischen zwei nahezu identischen, nicht spiegelnden Objekten sind. Dieses Verfahren ist im Journal of Physics E ; Scientific Instruments 1975, Vol. 8, Seiten 231/234 beschrieben. Es besteht darin, daß Laserlicht mittels eines Strahlteilers in zwei Strahlengänge aufgespalten wird und in jedem auf eine der zu vergleichenden Objektoberflächen trifft. Das reflektierte Licht erzeugt in der Interferogrammebene Signale, die in zwei aufeinanderfolgenden Vorgängen für jeweils eine Wellenlänge gewonnen werden. Die entsprechenden Signalfolgen werden subtrahiert und die Differenzsignale als Bild dargestellt, das aus hellen und dunklen Specklen besteht, die ein Interferenzstreifen-System bilden.

Es ist auch schon versucht worden, rauhe Oberflächen interferometrisch auszumessen. Dabei hat man Strahlung einer Wellenlänge von 10,6 μm verwendet. In einem Twyman-Green Interferometer entstehen dabei Interferenzstreifen, deren Kontrast mit zunehmender Oberflächenrauhigkeit schlechter wird (Appl. Optics Vol. 19, No. 11, 1980, S. 1862/1869). Dieses Verfahren hat den Nachteil, daß es mit unsichtbarer Strahlung arbeitet, so daß die Justierung des Interferometers sehr aufwendig und schwierig ist.

Es ist nun die Aufgabe der vorliegenden Erfindung ein Verfahren und eine zur Durchführung desselben geeignete Vorrichtung zum berührungsfreien Messen rauher Oberflächen anzugeben, das eine sehr genaue Messung hoher Ortsauflösung in Echtzeit unter Verwendung von Licht ermöglicht.

Diese Aufgabe wird erfindungsgemäß durch das Verfahren nach dem kennzeichnenden Teil des Anspruchs 1 gelöst. Entgegen der bisher allgemein verbreiteten Ansicht liefert ein solches interferometrisches Verfahren tatsächlich ein sinnvolles und sehr genaues Ergebnis, da die Einzelmessung auf Punkte kleiner oder gleich groß wie die in der Interferogrammebene entstehenden Laser Speckle beschränkt ist. Ein Speckle-Muster stellt sich als eine ungleichmäßige Verteilung von kleinen Hell-Stellen (Speckles) dar, die durch dunklere Bereiche voneinander getrennt sind. Diese Verteilung ist räumlich und zeitlich konstant, solange keine Bewegung zwischen Objekt und Laserlicht auftritt. Die hellen Speckles stellen Kohärenzgebiete dar, innerhalb deren die interferometrischen Verhältnisse eindeutig und meßbar sind. Die wichtigsten Eigenschaften von Speckle-Mustern sind in dem von J.C. Dainty herausgegebenen Buch « Laser-Speckle » beschrieben, das 1975 im Springer-Verlag Berlin, Heidelberg, New York erschienen ist.

Durch die Wahl der verwendeten Wellenlängen des Laserlichts läßt sich der Bereich festlegen, innerhalb dessen der Abstand des jeweiligen Meßpunktes von einer Referenzfläche eindeutig gemessen werden kann. Ist eine Oberfläche zu vermessen, deren Unebenheiten innerhalb eines vorbesstimmten Bereiches liegen, so läßt sich das Verfahren nach der Erfindung mit zwei, entsprechend gewählten Wellenlängen ausführen. Sind Oberflächen mit großen Profilhöhendifferenzen zwischen den Abtastpunkten zu vermessen, so läßt sich durch Verwendung von drei Wellenlängen der Meßbereich sehr effektiv erweitern. Falls von der Problemstellung her erforderlich, können auch noch zusätzliche Wellenlängen in geeigneter Form benutzt werden.

Die Messung bei mehreren Wellenlängen kann simultan oder auch aufeinanderfolgend vorgenommen werden.

Besonders vorteilhaft ist es die Phasendifferenzen im Meßfeld nach dem sogenannten Heterodyne-Verfahren zu messen. Dabei wird das Licht im Bezugsstrahlengang bei allen verwendeten Wellenlängen in seiner Frequenz gegenüber dem Meßstrahlengang um die Heterodynfrequenz verschoben. Eine ausführliche Darstellung des Heterodyne-Verfahrens findet sich in « Appl. Optics », Vol. 18, Nr. 11, 1979, S. 1797/1803.

Weitere vorteilhafte Ausgestaltungen des erfindungsgemäßen Verfahrens ergeben sich aus den Unteransprüchen 6 und 7.

Eine Vorrichtung zur Ausübung des Verfahrens nach der Erfindung ist Gegenstand des Unteranspruches 8.

Bei dieser Vorrichtung liegt die Interferogrammebene, in der das Speckle-Muster entsteht abbildungsmäßig konjugiert zur Oberfläche des Meßobjektes. Es kann vorteilhaft sein die Meßblende nicht direkt in der Interferogrammebene anzuordnen, sondern etwas defokussiert, d. h. außerhalb dieser Ebene. In diesem Fall trägt ein größerer Oberflächenbereich zu dem durch die Meßblende tretenden Licht bei. Die Phasendifferenz-Messung ergibt dann eine über dieser Oberflächenbereich des Meßobjekts gemittelte Profilhöhe. Damit wird das Meßverfahren relativ unempfindlich gegenüber Defokussierungen, so daß z. B. bei einer gekrümmten Objektoberfläche nicht ständig nachfokussiert werden muß.

Das Verfahren nach der vorliegenden Erfindung ermöglicht die Vermessung rauher Oberflächen im Maschinenbau mit interferometrischer Genauigkeit. Dieses Verfahren läßt sich auch zum hochgenauen Antasten von beliebigen Oberflächen verwenden. Dies ist gegenüber dem Stand der Antasttechnik mit mechanischer Antastung von Vorteil insbesondere bei weichen Materialien oder wenn die Antastung sehr schnell erfolgen soll.

Das Verfahren nach der Erfindung ermöglicht es beispielsweise nicht polierte optische Oberflächen mit demselben Gerät zu messen wie polierte Oberflächen. Da bei der Herstellung jeder optischen Oberfläche diese vor dem Polieren eine mikroskopische Rauhigkeit aufweist, ist ein solches Verfahren von besonderer Bedeutung für die optische Technologie. Es ist ferner auch ein wichtiger Schritt für ein automatisiertes Verfahren zur Herstellung unterschiedlich geformter optischer Oberflächen.

Die Erfindung wird im folgenden anhand der Figuren 1-4 der beigefügten Zeichnungen näher erläutert. Im einzelnen zeigen :

Fig. 1 ein zur Erläuterung des Meßprinzips dienendes Ausführungsbeispiel einer Vorrichtung nach der Erfindung ;

Fig. 2 ein weiteres Ausführungsbeispiel dieser Vorrichtung ;

Fig. 3 ein Ausführungsbeispiel der Vorrichtung nach der Erfindung, das zur Messung des Profils einer Oberfläche dient ;

Fig. 4 das in Fig. 3 gezeigte Ausführungsbeispiel in der Anwendung zur Profilmessung an einer großen, gekrümmten Oberfläche.

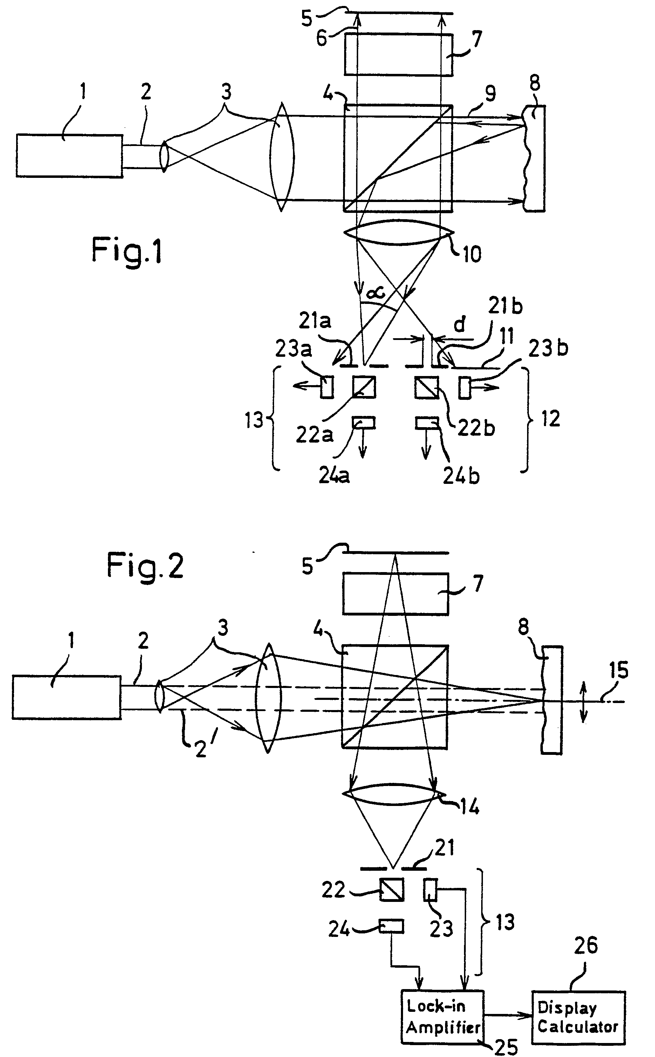

In Fig. 1 ist mit 1 ein Laser bezeichnet, welcher Licht zweier unterschiedlicher Wellenlängen $\lambda_1$ und $\lambda_2$ emittiert. Das Laserlicht 2 wird mittels der Linsen 3 aufgeweitet und trifft als Parallelstrahl auf den Strahlteiler 4. Dieser teilt das Laserlicht 2 in einen Referenzstrahlengang 6 und in einen Meßstrahlengang 9. Der Meßstrahlengang 9 trifft auf die zu vermessende Oberfläche des Objektes 8. Der Referenzstrahlengang 6 trifft auf die ebene Referenzfläche 5, welche beispielsweise als Spiegel ausgebildet ist. Das von den Flächen 5 und 8 reflektierte Licht wird im Strahlteiler 4 vereinigt und mit Hilfe einer Linse 10 in die Interferogrammebene 11 fokussiert, welche zur Referenzebene 5 konjugiert ist.

Bei den beim erfindungsgemäßen Verfahren zu vermessenden rauhen Oberflächen tritt in der Interferogrammebene 11 kein übliches Interferogramm sondern ein Speckle-Muster auf. In der Interferogrammebene 11 sind zwei Meßblenden 21a und 21b angeordnet, deren Durchmesser jeweils kleiner ist als ein mittlerer Speckle-Durchmesser s, der etwa von der Größe $s = \lambda/\alpha$ ist.

Bei der Vorrichtung der Figur 1 ist zwischen dem Strahlteiler 4 und der Referenzfläche 5 eine Einrichtung 7 angeordnet, welche die Frequenz der beiden Wellenlängen im Referenzbündel 6 in ihrer Frequenz gegenüber dem Meßbündel 9 um die sogenannte Heterodynefrequenz verschiebt. Es gibt viele geeignete aus dem Stand der Technik bekannte Verfahren zur Frequenzverschiebung, wobei eines dieser Verfahren auch schon in dem zitierten Aufsatz aus Appl. Optics, Vol. 18, Nr. 11, 1979, S. 1797/1803 bekannt ist. Die zu messende Phase findet sich dann in dem Signal mit der Hetereodynefrequenz, so daß die Messung vereinfacht wird.

Das durch die Meßblenden 21a und 21b tretende Licht fällt auf zwei dichromatische Strahlenteilerwürfel 22a, 22b, welche das Licht in die beiden Wellenlängenkomponenten aufteilt. Licht der ersten Wellenlänge $\lambda_1$ fällt beispielsweise auf die beiden Empfänger 23a und 23b, während Licht der zweiten Wellenlänge $\lambda_2$ auf die beiden Empfänger 24a und 24b trifft.

Das Detektorsystem 12, bestehend aus dem Strahlenteiler 22b und den beiden Empfängern 23b und 24b ist stationär und liefert die Referenzsignale S1R und S2R. Das Detektorsystem 13 bestehend aus dem Strahlenteiler 22a und den beiden Empfängern 23a und 24a ist beweglich und tastet zusammen mit der Meßblende 21a die Interferogrammebene ab. Dabei liefern die beiden Empfänger die Meßsignale S1M und S2M. Die von den beiden Detektorsystemen 12 und 13 gelieferten Signale werden jeweils einem Lock-In-Verstärker zugeführt und gelangen von dort aus zu einem Rechner, welcher das eigentliche Meßsignal ermittelt und anzeigt. Der Übersichtlichkeithalber sind in Fig. 1 die jeweiligen Verstärker und Rechner nicht gezeichnet ; ihre Anordnung ist jedoch dieselbe wie die des Verstärkers 25 und des Rechners 26 in der Darstellung der Fig. 2.

Da bei der Vorrichtung der Fig. 1 in der Interferogrammebene 11 kein übliches Interferogramm entsteht, sondern ein Speckle-Muster, erfolgt die Messung mit Hilfe von Laser-Speckle-Paaren, bestehend aus je einer Laser-Speckle der Wellenlänge $\lambda_1$ und $\lambda_2$. Zur eigentlichen Messung werden jeweils nur am selben Ort auf der Oberfläche des Objektes 8 auftretende Speckle-Paare zur Bestimmung des Meßsignals benutzt. Zur Auswahl der Laser-Speckle Paare dienen die beiden Meßblenden 21a und 21b, deren Durchmesser d kleiner ist als ein mittlerer Speckle-Durchmesser s. Es werden nur Meßdaten aus solchen Punkten aufgenommen, in welchen für beide Wellenlängen $\lambda_1$ und $\lambda_2$ eine helle Laser-Speckle vorliegt. Ist diese Bedingung nicht erfüllt, so erfolgt keine Messung. Der den Empfängern 23, 24 nachgeschaltete Lock-In-Verstärker liefert, wenn man ihm in dem für das vorliegende Problem geeigneten Phasen Meßmodus betreibt und von selbst ein Warnsignal wenn keine helle Laser-Speckle auf den Meßblenden liegt.

Zur eigentlichen Messung wird zunächst die Phasendifferenz $\Delta\varphi$ der Referenzsignale S1R und S2R bestimmt und zwar als Differenz der Phasen $\varphi_1$ und $\varphi_2$ der Interferogramme von $\lambda_1$ und $\lambda_2$ in dem von der Meßblende 21b erfaßten Laser-Speckle des Referenzpunktes. Der Meßpunkt wird durch die Meßblende 21a festgelegt, die bei ihrer Bewegung in der Interferogrammebene 11 praktisch die Oberfläche des Objektes 8 abtastet. Die Phasen im jeweiligen Meßpunkt sind damit durch die folgenden Gleichungen definiert

$$\psi_1 = \varphi_1 + \frac{2\,\pi}{\lambda_1}\cdot h$$

$$\psi_2 = \varphi_2 + \frac{2\,\pi}{\lambda_2}\cdot h$$

wobei h die zusätzliche Wegdifferenz zwischen Objektlicht und Referenzlicht im jeweiligen Meßpunkt ist und zwar verglichen mit der Wegdifferenz im Referenzpunkt. h beschreibt damit das Oberflächenprofil des Meßobjektes nachbezogen auf den Referenzspiegel 5. Durch Auswertung der Signale S1M und S2M wird die Differenz $\Delta\varphi = \varphi_1 - \varphi_2$ der Interferogrammphasen im Meßpunkt bestimmt. Für $\Delta\varphi$ ergibt sich damit :

$$\Delta\psi = \Delta\varphi + 2\,\pi\cdot\frac{\lambda_2 - \lambda_1}{\lambda_1\cdot\lambda_2}\cdot h$$

Aus dieser Gleichung läßt sich im Rechner 26 die Profilhöhe h eindeutig bestimmen solange zwischen benachbarten Punkten h nicht größer als

$$\frac{\lambda_1\cdot\lambda_2}{|\lambda_2 - \lambda_1|}$$

ist. Ist h größer, so bleibt diese Profilhöhe bis auf das Vielfache des letzterwähnten Ausdruckes unbestimmt.

Durch Wahl der Wellenlängen $\lambda_1$ und $\lambda_2$ kann man das Verfahren den zu erwartenden Unebenheiten der Oberfläche des Meßobjektes 8 anpassen.

Das im Zusammenhang mit Figur 1 beschriebene Meßverfahren mit zwei Wellenlängen liefert bei der Abtastung rauher Oberflächen solange sinnvolle Werte für das Oberflächenprofil h des Meßobjektes 8, solange $\Delta\varphi$ sich von Abtastpunkt zu Abtastpunkt um weniger als $\pm\,\pi$ ändert. Der Grund hierfür ist daß $\Delta\varphi$ nur bis auf das Vielfache von $2\pi$ meßbar ist. Durch Hinzunahme einer weiteren Wellenlänge $\lambda_3$ läßt sich der Meßbereich des Verfahrens nach großen Profilhöhendifferenzen zwischen den Abtastpunkten sehr effektiv erweitern. Für die dritte Wellenlänge $\lambda_3$ sollte folgende Beziehung gelten :

$$\frac{\lambda_1\cdot\lambda_3}{|\lambda_3 - \lambda_1|} > \frac{\lambda_1\cdot\lambda_2}{|\lambda_2 - \lambda_1|}$$

Falls erforderlich können noch weitere zusätzliche Wellenlängen in geeigneten Kombinationen benutzt werden und zwar entsprechend der jeweils vorliegenden Meßaufgabe. Dabei ist es zur Vereinfachung der Justierung und des Meßvorganges erforderlich, daß jeweils mindestens eine Wellenlänge im sichtbaren Spektralbereich liegt.

Die Vorrichtung nach Figur 1 liefert, wie unschwer zu erkennen ist, nur sehr schwache meßsignale, da die gesamte Oberfläche des Meßobjektes 8 mit dem Meßstrahl 9 beleuchtet wird. Die Figur 1 dient, wie schon eingangs gesagt in erster Linie dazu das Meßprinzip zu erläutern.

Bei der Vorrichtung nach Figur 2 ist das Linsensystem 3 so ausgebildet, daß der Laserstrahl 2 auf einen Punkt der Oberfläche des Meßobjektes 8 fokussiert wird. Dieser Punkt stellt den jeweiligen Meßpunkt dar. Zwischen dem Strahlteiler 4 und der Meßblende 21 ist eine Linser 14 angeordnet, welche das vom Referenzspiegel 5 und von der Objektoberfläche 8 reflektierte Licht in die Meßblende 21 abbildet. Diese Meßblende ist stationär, während das Objekt 8 zur Messung des Oberflächenprofils in Richtung des Doppelpfeils bewegt wird.

Die dargestellte Vorrichtung eignet sich neben der Messung von Oberflächenprofilen auch zur Antastung von beliebigen Oberflächen, d. h. zur Feststellung der Position der Oberfläche eines Objektes 8 auf der optischen Achse 15 der Vorrichtung.

Da man sich meist nur für den Verlauf des Oberflächenprofils relativ zur einer Referenzfläche interessiert und da die Phasendifferenz $\Delta\varphi$ im Referenzpunkt konstant bleibt, kann man die Messung im Referenzpunkt und damit die Detektorgruppe 12 in der Figur 1 auch weglassen. Dies ist im Ausführungsbeispiel der Figur 2 geschehen.

Das durch die Meßblende 21 durchtretende Licht wird durch den Strahlenteiler 22 in Licht der beiden verwendeten Wellenlängen aufgespalten, wobei das Licht der einzelnen Wellenlängen auf die beiden Empfänger 23 und 24 trifft. Das von diesen erzeugte Signal wird einem Lock-In-Verstärker 25 zugeführt, welcher die Phasendifferenz Δφ mißt. Dieses Signal wird im Rechner 26 zum eigentlichen Meßsignal erarbeitet.

Bei der Vorrichtung nach Figur 2 ist die zweite Detektorgruppe 13 weggelassen, so daß der Verlauf des Oberflächenprofils des Objektes 8 relativ zu einer Referenzfläche gemessen wird. Wenn man Oberflächen mißt, die beispielsweise während der Bearbeitung in den spiegelnd reflektierenden Zustand kommen, kann es sinnvoll sein mindestens einen der Empfänger der Detektorgruppe 12 beizubehalten, weil man in diesem Fall mit der bekannten Heterodyne-Interferometrie mit derselben Vorrichtung und mit sehr hoher interferometrischer Meßgenauigkeit weitermessen kann.

Wie schon vorstehend erwähnt liegt die Interferogrammebene 11, in welcher die Meßblende 21 angeordnet ist zur Oberfläche des Meßobjektes 8 abbildungsmäßig konjugiert. Für bestimmte Anwendungsfälle kann man die Meßblende 21 etwas außerhalb der Interferogrammebene 11 anordnen. Dann trägt ein größerer Oberflächenbereich des Meßobjektes 8 zu dem von der Meßblende 21 registrierten Licht bei. Die Phasenmessung ergibt dann eine über diesen Oberflächenbereich des Meßobjektes 8 gemittelte Profilhöhe h. Dadurch wird das beschriebene Meßverfahren relativ unempfindlich gegenüber Defokussierung, so daß beispielsweise bei gekrümmten Objektoberflächen nicht ständig nachfokussiert werden muß. Andererseits kann eine solche Mittelung bei abbildungsmäßig defokussierter Abtastung für spezielle Fragestellungen von Interesse sein.

Gegenüber der Vorrichtung nach Figur 1 erhält man schon eine wesentliche Verbesserung der Energieausbeute dadurch, daß man das Strahlaufweitungssystem 3 wegläßt. Dieser Fall ist in Figur 2 gestrichelt eingezeichnet. Hier beleuchtet der unaufgeweitete Laserstrahl 2' das Meßobjekt 8.

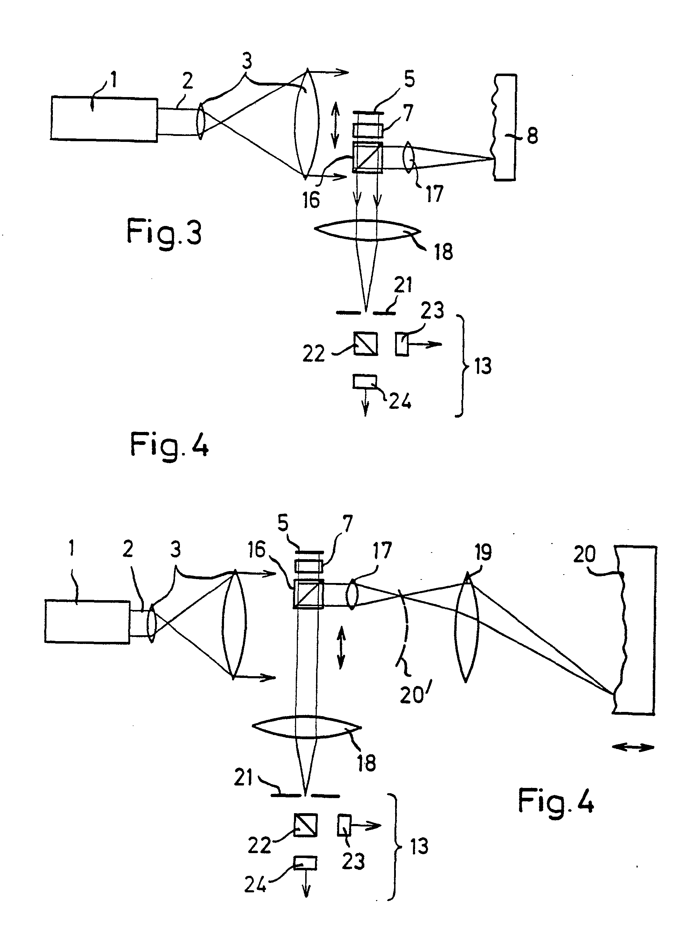

Bei größeren Objekten 8 kann eine präzise Verschiebung dieser gegenüber der Meßvorrichtung problematisch werden. In solchen Fällen ist die Vorrichtung nach Figur 3 eine sinnvolle Alternative. Hier wird ein kleinerer Strahlenteiler 16 benützt, der gemeinsam mit der Heterodyne-Einrichtung 7, dem Referenzspiegel 5 und einer fokussierenden Linse 17 die zweidimensionale Abtastbewegung ausführt, welche in der Zeichenebene und senkrecht zu dieser verlaufen kann. Das Objekt 8 selbst bleibt entweder ortsfest oder kann makroskopisch der Oberfläche nachfokussiert werden. Eine Linse 18 fokussiert das Meßlicht auf die Meßblende 21 des Detektorsystems 13. Da der Durchmesser der Linse 17 deutlich kleiner ist als jener des Objektivs des Strahlaufweitungssystems 3 tritt hier gegenüber der Vorrichtung nach Figur 2 zwar ein Energieverlust auf ; dieser ist aber bedeutend geringer als bei der Vorrichtung nach Figur 1.

Zur Messung von Oberflächen, deren Ausdehnung größer ist als der Abtastbereich kann auch ein verkleinertes und im entgegengesetzen Fall ein vergrößertes Bild der Meßobjektoberfläche abgetastet werden.

Figur 4 zeigt ein Ausführungsbeispiel der erfindungsgemäßen Vorrichtung welches zur Messung einer konkaven Oberfläche 20 dient, deren Ausdehnung größer ist als der Abtastbereich, welcher durch die Verschiebung der Elemente 16, 17, 7, 5 festgelegt ist. Mit 19 ist hier eine Abbildungsoptik bezeichnet, welche ein verkleinertes reelles Bild 20' der Objektoberfläche 20 erzeugt. Gemessen wird dann im Effekt im Bild 20'.

Um auch makroskopisch krumme Oberflächen vermessen zu können, kann entweder das Objekt 20, die Abbildungsoptik 19 oder die fokussierende Optik 17 um bekannte Beträge in Richtung der optischen Achse 15 verschoben werden. Diese Verschiebungsrichtung ist in Figur 4 durch den Doppelpfeil unterhalb des Meßobjektes 20 angedeutet.

## Patentansprüche

1. Verfahren zum berührungsfreien Messen der Ist-Position und/oder des Profils rauher Oberflächen, bei dem Laserlicht mit mindestens zwei unterschiedlichen Wellenlängen verwendet wird, das in einen auf eine Referenzfläche gerichteten Bezugsstrahlengang und einen auf die zu messende Oberfläche gerichteten Meßstrahlengang aufgespalten wird und bei dem das reflektierte Licht in der Interferogrammebene ein Speckle-Muster bildet, aus dem der Abstand zwischen korrespondierenden Punkten der Meß- und Referenzfläche entnehmbar ist, dadurch gekennzeichnet, daß mindestens eine Wellenlänge des Laserlichts im sichtbaren Spektralbereich liegt, und daß jeweils ein für alle Wellenlängen helles Laser-Speckle des Speckle-Musters in der Interferogrammebene ausgewählt und in diesem die Phasendifferenz zwischen den Signalen der verschiedenen Wellenlängen gemessen und in ein dem Abstand h des jeweiligen Meßpunktes von der Referenzfläche proportionales Signal umgerechnet wird.

2. Verfahren nach Anspruch 1, dadurch gekennzeichnet, daß Licht dreier Wellenlängen verwendet wird.

3. Verfahren nach Anspruch 1 und 2, dadurch gekennzeichnet, daß die Messung bei verschiedenen Wellenlängen simultan erfolgt.

4. Verfahren nach Anspruch 1, dadurch gekennzeichnet, daß die Frequenz des Lichtes im Referenzstrahlengang (6) verschoben wird und daß die Messung bei der entstehenden Heterodyne-Frequenz erfolgt.

5. Verfahren nach Anspruch 1, dadurch gekennzeichnet, daß das Meßlicht (9) auf die Objektoberfläche (8) fokussiert wird.

6. Verfahren nach Anspruch 1 und 5, dadurch gekennzeichnet, daß die Objektoberfläche (8) relativ zum Meßstrahl (9) verschoben wird.

7. Vorrichtung zum berührungsfreien Messen der Ist-Position und/oder des Profils rauher Oberflächen mit einer Laser-Lichtquelle (1) zur Erzeugung von Licht mit mindestens zwei unterschiedlichen Wellenlängen, einem zwischen Lichtquelle (1) und Objekt (8) angeordneten Strahlteiler (4) zur Aufspaltung des Laser-Lichts in einen Bezugs- und einen Meßstrahlengang (6, 9) und einer Linse (10) zur Fokussierung des reflektierten Lichts in die Interferogrammebene (11), dadurch gekennzeichnet, daß die Laser-Lichtquelle (1) das Licht mit unterschiedlichen Wellenlängen simultan erzeugt, wobei mindestens eine der Wellenlängen im sichtbaren Spektralbereich liegt, daß im Bezugsstrahlengang (6) eine plane Referenzfläche (5) angeordnet ist, daß in der Interferogrammebene (11) eine Meßblende (21) mit einem Öffnungs-Durchmesser kleiner als eines in dieser Ebene entstehenden Laser-Speckles zur Auswahl eines für alle Wellenlängen hellen Laser-Speckle verschiebbar angeordnet ist, und daß hinter dieser Meßblende (21) ein Strahlteiler zur Wellenlängen-Aufspaltung des Meßlichts und zur Weiterleitung des aufgespaltenen Lichtes auf jeweils einen Detektor (23, 24) angeordnet ist, wobei diesen Detektoren (23, 24) eine Anordnung (25, 26) zur Erzeugung des der Phasendifferenz zwischen den Detektorsignalen proportionalen Meßsignals nachgeschaltet ist.

8. Vorrichtung nach Anspruch 7, dadurch gekennzeichnet, daß im Bezugsstrahlengang (6) eine Einrichtung (7) zur Verschiebung der Frequenz des Referenzlichtes um eine Heterodynefrequenz angeordnet ist, und daß die meßanordnung auf die Messung der Phasendifferenz bei dieser Heterodynefrequenz ausgelegt ist.

9. Vorrichtung nach Anspruch 7 und 8, dadurch gekennzeichnet, daß die Meßblende (21) außerhalb der Interferogrammebene (11) angeordnet ist.

10. Vorrichtung nach Anspruch 7 und 8, dadurch gekennzeichnet, daß Strahlteiler (16), Referenzfläche (5) und eine zwischen Strahlteiler (16) und der Objektoberfläche (8) angeordnete Fokusierungslinse (17) gegenüber dem Objekt verschiebbar sind.

## Claims

1. Method for contact-free measurement of the actual position and/or of the profile of rough surfaces in which laser light with at least two different wavelengths is used, which is split into a reference beam directed onto a reference surface and into a measuring beam directed onto the surface to be measured and in which the reflected light generates a speckle pattern in the interferogram plane, from which the distance between corresponding points in the measuring surface and the reference surface can be measured, characterized in that at least one of said wavelengths of the laser light lies in the visible spectral region, that one laser speckle which is bright for all wavelengths is selected out of said speckle pattern in the interferogram plane and that in said laser speckle the difference in phase between the signals corresponding to the different wavelengths is measured and is converted into a signal proportional to the distance h of the particular measuring point from the reference surface.

2. Method according to claim 1, characterized in that light consisting of three wavelengths is utilized.

3. Method according to claims 1 and 2, characterized in that the measurement at different wavelengths is conducted simultaneously.

4. Method according to claim 1, characterized in that the frequency of the light in the reference beam path (6) is displaced, and that the measurement is conducted at the occuring heterodyne frequency.

5. Method according to claim 1, characterized in that the measuring light (9) is focused onto the surface of the object (8).

6. Method according to claim 1 and 5, characterized in that the surface of the object (8) is displaced relative to the measuring beam (9).

7. Apparatus for contact-free measurement of the actual position and/or the profile of rough surfaces, comprising a laser-light source (1) for generating light having at least two different wavelengths, a beam splitter (4) arranged between light source (1) and object (8) for splitting said laser light into a reference beam path (6) and a measuring beam path (9), a lens (10) for focusing the reflected light in the interferogram plane (11), characterized in that said laser-light source (1) generates the light having different wavelengths simultaneously, one of said wavelengths lying in the visible spectral region, that a planar reference surface (5) is arranged in said reference beam path (6), that a measuring diaphragm (21) is arranged in the interferogram plane (11), this measuring diaphragm having an opening-diameter less than the diameter of a laser speckle generated in this plane and being arranged displaceable for the selection of a laser-speckle being bright for all wavelengths, and in that behind said measuring diaphragm (21) a beam splitter is arranged for splitting the measuring light into component beams corresponding to respective ones of said different wavelengths and for conducting each component beam onto one detector (23, 24), an arrangement (25, 26) disposed downstream of said detectors (23, 24) and serving for generating a measuring signal proportional to the difference in phase between said detector signals.

8. Apparatus according to claim 7, characterized in that an arrangement (7) for displacing the frequency of the reference light by a heterodyne frequency is arranged in the reference beam path (6), and that the measuring arrangement is developed for measuring the difference in phase at said heterodyne frequency.

9. Apparatus according to claim 7 and 8, characterized in that the measuring diaphragm (21) is arranged outside of said interferogram plane (11).

10. Apparatus according to claim 7 and 8, characterized in that beam splitter (16), reference surface (5) and a focussing lens (17) arranged between beam splitter (16) and the surface of the object (8) are displaceable with respect to the object.


## Revendications

1. Procédé de mesure sans contact d'une position réelle et/ou du profil de surfaces rugueuses dans lequel on utilise de la lumière laser d'au moins deux longueurs d'ondes différentes, qui est divisée en un chemin optique de référence dirigé sur une surface de référence et un chemin optique de mesure qui est dirigé sur la surface à mesurer et dans lequel la lumière réfléchie réalise un échantillon de tache dans le plan d'interférogramme grâce auquel on peut déterminer la distance entre des points correspondants de la surface à mesurer et de la surface de référence, caractérisé en ce qu'au moins une longueur d'ondes de la lumière laser se trouve dans le domaine visible du spectre, et en ce que l'on choisit dans le plan d'interférogramme une tache laser de l'échantillon de taches claires pour toutes les longueurs d'ondes, on mesure dans cette tache la différence de phases entre les signaux de diverses longueurs d'ondes et on calcule à partir de cette tache un signal proportionnel à la distance h du point respectif de mesure à la surface de référence.

2. Procédé selon la revendication 1, caractérisé en ce que l'on utilise de la lumière de trois longueurs d'ondes.

3. Procédé selon la revendication 1 ou 2, caractérisé en ce que la mesure est réalisée de façon simultanée pour diverses longueurs d'ondes.

4. Procédé selon la revendication 1, caractérisé en ce que la fréquence de la lumière dans le chemin optique (6) de référence est décalée et en ce que la mesure est réalisée avec la fréquence hétérodyne qui en résulte.

5. Procédé selon la revendication 1, caractérisé en ce que la lumière (9) de mesure est focalisée sur la surface (8) d'objet.

6. Procédé selon les revendications 1 et 5, caractérisé en ce que la surface (8) de l'objet est décalée par rapport au rayon (9) de mesure.

7. Dispositif pour la mesure sans contact de la position réelle et/ou du profil de surfaces rugueuses avec une source (1) de lumière laser pour émettre de la lumière d'au moins deux longueurs d'ondes différentes, une lame séparatrice disposée entre la source (1) de lumière et l'objet (8) pour diviser la lumière laser en un chemin optique de référence et un chemin optique de mesure (6, 9) et une lentille (10) pour focaliser la lumière réfléchie dans le plan (11) d'interférogramme, caractérisé en ce que la source (1) de lumière laser émet simultanément la lumière avec les diverses longueurs d'ondes, au moins une des longueurs d'ondes étant située dans le domaine visible du spectre, en ce qu'une surface plane de référence est disposée dans le chemin optique (6) de référence, en ce qu'on dispose dans le plan (11) d'interférogramme un obturateur (21) coulissant de mesure avec un diamètre d'ouverture inférieur à celui d'une tache laser qui se produit dans ce plan choisie parmi les taches laser claires de toutes les longueurs d'ondes, et en ce que derrière cet obturateur (21) de mesure est disposée une lame séparatrice pour diviser selon les longueurs d'ondes la lumière de mesure et transmettre la lumière divisée respectivement sur un détecteur (23, 24), un dispositif (25, 26) pour engendrer un signal de mesure proportionnel à la différence de phases entre les signaux de détecteurs étant monté en aval de ces détecteurs (23, 24).

8. Dispositif selon la revendication 7, caractérisé en ce que dans le chemin optique (6) de référence est disposé un appareillage (7) pour décaler la fréquence de la lumière de référence d'une fréquence hétérodyne et en ce que la disposition de mesure repose sur la mesure de la différence de phases avec cette fréquence hétérodyne.

9. Dispositif selon les revendications 7 et 8, caractérisé en ce que l'obturateur (21) de mesure est disposé en dehors du plan (11) d'interférogramme.

10. Dispositif selon les revendications 7 et 8, caractérisé en ce que peuvent coulisser par rapport à l'objet la lame séparatrice (16), la surface (5) de référence et une lentille (17) de focalisation disposée entre la lame séparatrice (16) et la surface (8) de l'objet.

Fig.1

Fig.2

Lock-in Amplifier

Display Calculator

Fig. 3

Fig. 4

Fig. 4